# EUROPÄISCHE PATENTSCHRIFT

(11) **EP 4 086 412 B1**
(45) Veröffentlichungstag und Bekanntmachung des Hinweises auf die Patenterteilung: **23.04.2025**
(21) Anmeldenummer: 22170630.2
(22) Anmeldetag: 28.04.2022
(51) Int. Cl.: E04H 17/18, E01F 13/02, F16B 2/06, F16B 7/04

(54) **BAUZAUNVERBINDER ZUM VERBINDEN VON BAUZAUNELEMENTEN**
CONSTRUCTION FENCE CONNECTOR FOR CONNECTING CONSTRUCTION FENCE ELEMENTS
LIAISON DE CLÔTURE PERMETTANT DE RELIER DES ÉLÉMENTS DE CLÔTURE

(30) Priorität: 03.05.2021 DE 102021111395
(43) Veröffentlichungstag der Anmeldung: 09.11.2022
(73) Patentinhaber: Westenergie AG, 45128 Essen (DE)
(72) Erfinder: Ende, Sven, 59075 Hamm (DE)
(74) Vertreter: Bals & Vogel Patentanwälte PartGmbB

(56) Entgegenhaltungen:
- DE-U1- 202005 013 392
- GB-A- 2 338 770
- GB-A- 2 473 876
- US-A1- 2018 155 939

## Beschreibung

Die Erfindung betrifft einen Bauzaunverbinder zum Verbinden von einem ersten und zweiten Bauelement.

Bauzäune werden insbesondere zu temporären Absicherungen bzw. zur Abgrenzung oder Absperrung von Baustellen und dgl. verwendet und gehören zur Baustelleneinrichtung. Dabei kommen zumeist standardisierte verzinkte Bauzaunelement mit Drahtgittern und Sockelfüßen, insbesondere aus Beton zum Einsatz, welche eine schnelle und einfache Einrichtung einer Baustellenabsicherung ermöglichen.

Je nach der einzurichtenden Baustelle werden an die Bauzaunelemente unterschiedliche Anforderungen gestellt. Dementsprechend können an den Bauzaunelementen Staub-, Unfallschutz oder gestalterische Merkmale vorgesehen sein. Besondere Anforderungen werden an Bauzäune gestellt, welche in der Umgebung von stromführenden Leitungen, insbesondere Hochspannungsleitungen aufgestellt werden. Um sicherzustellen, dass die Bauzaunelemente zuverlässig das Eindringen von Passanten verhindern und auch beispielsweise bei stärkeren Winden nicht umkippen, sind diese Bauzaunelemente in der Regel zusätzlich zu einer Verbindung durch die Sockelfüße mit weiteren Verbindungselementen verbunden.

Aus dem Stand der Technik sind hierzu Bauzaunschellen bekannt, welche an den vertikalen Teilen der Rahmenabschnitte der Bauzaunelemente angebracht sind und die Bauzaunelemente zusätzlich zu den Sockelfüßen miteinander verbinden. Diese sind in der Regel zumindest teilweise aus verzinkten Stahlelementen hergestellt.

Jedoch hat sich bei der Anwendung dieser Bauzaunschellen zum Verbinden von Bauzaunelementen in der Nähe von Stromleitungen der Nachteil ergeben, dass diese eine leitende Verbindung zwischen den Bauzaunelementen herstellen. Durch die Aufstellung der Bauzaunelemente in der Nähe von Spannungsleitungen kann es zu einer kapazitiven Einkoppelung von Ladung in die Bauzaunelemente kommen. Zwar hat ein einzelnes Bauzaunelement in der Regel nur eine Kapazität von ca. 240 Picofarad, jedoch kann durch die durch die Bauzaunschellen hergestellte elektrische Verbindung der einzelnen Bauzaunelemente eine größere Gesamtkapazität entstehen, bei der gefährliche Berührungsspannungen und Entladungsenergien auftreten können. Dadurch werden Personen, welche sich in der Nähe der so geladenen Bauzaunelemente aufhalten, gefährdet.

Das Dokument GB 2 338 770 A offenbart einen Bauzaunverbinder gemäß dem Oberbegriff des Anspruchs 1.

Es ist daher die Aufgabe der vorliegenden Erfindung, voranstehende, aus dem Stand der Technik bekannte Nachteile zumindest teilweise zu beheben. Insbesondere ist es die Aufgabe der vorliegenden Erfindung, einen Bauzaunverbinder zum Verbinden von Bauzaunelementen bereitzustellen, bei dem die Sicherheit erhöht ist und gleichzeitig eine einfache, kostengünstige Einrichtung einer Bauzaunabsicherung gewährleistet wird.

Die voranstehende Aufgabe wird gelöst durch einen Bauzaunverbinder mit den Merkmalen des Hauptanspruchs. Weitere Merkmale und Details der Erfindung ergeben sich aus den jeweiligen Unteransprüchen, der Beschreibung und den Zeichnungen.

Erfindungsgemäß ist ein Bauzaunverbinder zum (mechanischen) Verbinden von einem ersten und zweiten Bauzaunelement, welche insbesondere in der Nähe von stromführenden Leitungen, insbesondere Drehstromfreileitungen aufgestellt werden, vorgesehen. Dieser weist ein erstes und ein zweites Klemmelement auf, die miteinander verbindbar sind und in einem verbundenen Zustand zumindest eine erste und zweite Öffnung bilden, durch die jeweils ein Rahmenabschnitt des ersten und zweiten Bauzaunelements führbar und/oder fixierbar ist, wodurch die Bauzaunelemente miteinander verbindbar sind. Weiterhin ist erfindungsgemäß vorgesehen, dass die Klemmelemente jeweils zumindest einen Isolatorabschnitt aufweisen, wobei die Isolatorabschnitte derart ausgestaltet sind, dass die Bauzaunelemente elektrisch voneinander getrennt sind (gemeint ist eine galvanische Trennung), wenn die Bauzaunelemente durch die Klemmelemente (mechanisch) verbunden sind. Mit anderen Worten sind zumindest zwei Verbindungselemente (in Form der Klemmelemente) vorgesehen, welche in einem verbundenen Zustand um Rahmenabschnitte des Bauzaunelements herum angeordnet sind, um diese miteinander zu verbinden. Die Klemmelemente sind dabei so ausgebildet, dass diese auch für den Fall, dass sie die Bauzaunelemente berühren (gemeint ist kontaktieren), keine elektrische Verbindung zwischen den Bauzaunelementen herstellen. Hierdurch wird insbesondere eine galvanische Trennung der jeweiligen Rahmenabschnitte und der Bauzaunelemente insgesamt erreicht. Mit Isolatorabschnitt ist jede Vorrichtung oder jedes Element gemeint, welche dazu geeignet ist, einen nennenswerten elektrischen Stromfluss zu verhindern. Dabei sind unterschiedlichste Anordnungen denkbar, wobei von entscheidender Bedeutung ist, dass der Strompfad zwischen den beiden Bauzaunelementen unterbrochen bleibt. Es kann vorgesehen sein, dass die Klemmelemente selbst den Isolatorabschnitt (zumindest teilweise oder vollständig) bilden. Dadurch wird besonders zuverlässig verhindert, dass der Bauzaunverbinder eine elektrische Verbindung zwischen den verbundenen Bauzaunelementen ausbilden kann.

Es kann vorgesehen sein, dass der Isolatorabschnitt ein Material aufweist, welches zumindest unter natürlich im Freien herrschenden Umgebungsbedingungen einen hohen spezifischen Widerstand und/oder eine hohe Durchschlagsfestigkeit aufweist. Ein solches Material kann beispielsweise eine Keramik, insbesondere eine Aluminiumoxidkeramik, ein Porzellan, ein Glas, ein, insbesondere glasfaserverstärkter, Kunststoff, ein Epoxidharz oder Kombination aus diesen Materialien sein. Es kann vorgesehen sein, dass das Material einen spezifischen Widerstand von weniger als 10¹² Ω m, bevorzugt weniger als 10¹³ Ω m und besonders bevorzugt weniger als 10¹⁴ Ω m aufweist. Bei dem Kunststoff kann es sich beispielsweise um einen thermoplastischer Kunststoff, insbesondere Acrylnitril-Butadien-Styrol (ABS), Polyamide (PA), Polylactat (PLA), Polymethylmethacrylat (PMMA), Polycarbonat (PC), Polyethylenterephthalat (PET), Polyethylen (PE), Polypropylen (PP), Polystyrol (PS), Polyetheretherketon (PEEK) und Polyvinylchlorid (PVC) handeln, die kostengünstig herstellbar sind.

Thermoplastische Kunststoffe bieten den Vorteil, dass diese sich in einem bestimmten Temperaturbereich verformen lassen, wodurch die Isolatorabschnitte besonders einfach in unterschiedlichsten Geometrien herstellbar sind, sodass diese an die Rahmenabschnitte anpassbar sind, wodurch die Montage vereinfacht ist. Darüber hinaus können thermoplastische Kunststoffe in der Regel auch verschweißt werden, wodurch eine stoffschlüssige Verbindung bei den bzw. zwischen den Klemmelementen herstellbar ist.

Die Verwendung von ABS bietet den Vorteil, dieser besonders beständig gegen Witterungseinfluss und Alterung ist. Die Verwendung von PS bietet den Vorteil, dass diese Kunststoffe eine besonders hohe Festigkeit und Steifigkeit aufweisen und dabei chemisch beständig sind. PA bietet den Vorteil, dass dieses besonders UV-beständig ist, sodass auch eine Verwendung im Freien über einen längeren Zeitraum auch unter Sonneneinstrahlung erfolgen kann. Die Verwendung von PMMA bietet den Vorteil, dass dieses besonders kratzfest und darüber hinaus Witterungs- und Alterungsbeständig ist. Die Verwendung von PC für den Isolatorabschnitt bietet den Vorteil, dass sich Polycarbonate durch eine besonders hohe Schlagzähigkeit, Steifigkeit und Härte auszeichnen, also mechanisch besonders robust bei geringem Gewicht sind. PET bietet den Vorteil, gegen besonders viele Chemikalien unempfindlich zu sein. PE ist ein besonders guter elektrischer Isolator, welcher eine gute Kriechstrombeständigkeit aufweist. PP ähnelt in seinen Eigenschaften und damit auch seinen Vorteilen dem PE, wobei Produkte aus PP in der Regel besonders günstig herstellbar sind. Auch PS ist ebenfalls ein besonders günstig herstellbarer Kunststoff, welcher außerdem gegen Wassereinwirkung beständig ist. Um die Empfindlichkeit von PS gegenüber UV-Strahlung auszugleichen, kann es vorgesehen sein, den Kunststoff mit einem als UV-Stabilisator wirkenden Additiv zu versehen. Die Verwendung von PEEK bietet den Vorteil, dass seine guten chemischen und mechanischen Eigenschaften auch bei hohen Temperaturen bestehen bleiben. PVC bietet den Vorteil, dass es ein guter Isolator ist, wodurch sicher verhindert werden kann, dass eine elektrische Verbindung zwischen den Bauzaunelementen entsteht.

Es kann weiter vorgesehen sein, dass ein Witterungsabschnitt an den Klemmelementen vorgesehen ist, welcher derart ausgebildet ist, dass das Ablagern von Niederschlägen auf den Klemmelementen verhindert wird. Bei Niederschlägen kann es sich beispielsweise witterungsbedingt um Regen und/oder Schnee handeln. Darüber hinaus ist auch denkbar, dass das Ablagern von anderen leitfähigen Materialien auf der Oberfläche der Klemmelemente verhindert wird.

Beispielsweise kann vorgesehen sein, dass die Oberfläche der Klemmelemente eine besonders niedrige Oberflächengenauigkeit aufweist, sodass Niederschläge sich dort nicht ablagern können. Die Oberflächengenauigkeit kann auch so angepasst sein, dass Wasser in einen Cassie-Baxter Zustand übergeht, wenn es in Verbindung mit der Oberfläche kommt, sodass größere Wassertopfen von der Oberfläche abrollen.

Weiterhin kann eine hydrophobe Beschichtung auf den Klemmelementen vorgesehen sein, die ebenfalls verhindert, dass sich Wasser auf der Oberfläche der Klemmelemente ansammeln kann.

Alternativ oder in Ergänzung dazu kann vorgesehen sein, dass die Klemmelemente eine Geometrie aufweisen, welche dazu führt, dass Niederschläge sich, insbesondere in einem im verbundenen Zustand, nicht auf den Klemmelementen ablagern können, sondern durch Gravitationskräfte von den Klemmelementen heruntergezogen werden. Beispielsweise kann hierzu eine Fase an zumindest einer Kante des Klemmelements vorgesehen sein. Alle vorgenannten Ausführungsformen des Witterungsabschnitts bieten den Vorteil, dass das Fließen von Kriechstrom sicher verhindert wird.

Es kann vorgesehen sein, dass es sich bei den Klemmelementen um Gleichteile handelt. Dies bietet den Vorteil, dass die Herstellung kostengünstiger ist und die Montage der Bauzaunverbinder vereinfacht wird.

Weiterhin kann vorgesehen sein, dass zumindest drei Klemmelemente oder mehr miteinander verbindbar sind und im verbundenen Zustand eine erste und zweite Öffnung bilden, durch die jeweils ein Rahmenabschnitt des ersten und zweiten Bauzaunelements führbar ist, wodurch die Bauzaunelemente miteinander verbindbar sind. Dies bietet den Vorteil, dass die Klemmelemente entsprechend der Geometrie der Bauzaunelemente einfach angepasst werden können, wodurch die Montage erleichtert wird.

Es kann vorgesehen sein, dass die Klemmelemente eine unterschiedliche Geometrie aufweisen. Dadurch kann erreicht werden, dass unterschiedliche Anforderungen mit unterschiedlichen Geometriemerkmalen der Klemmelemente erfüllt werden. Beispielsweise kann es notwendig sein, dass die Klemmelemente nur von einer Seite miteinander verbindbar sein dürfen, um beispielsweise einen Zugriff von Unberechtigten auf die Verbindung der Klemmelemente zu verhindern.

Die Verbindung zwischen den Klemmelementen kann formschlüssig und/oder kraftschlüssig und/oder stoffschlüssig erfolgen. Dabei bietet ein Formschluss den Vorteil, dass dieser besonders einfach durch die Montage herstellbar ist, wodurch die Montage der Bauzaunverbinder vereinfacht wird. Beispielsweise können die Klemmelemente so ausgebildet sein, dass diese derart steckbar miteinander verbindbar sind, dass diese einen Formschluss bilden. Dies stellt eine besonders einfache Möglichkeit der Montage dar. Es kann ebenfalls vorgesehen sein, dass die Klemmelemente derart ausgebildet sind, dass diese miteinander verklebt werden können, wodurch der Zugriff durch Unbefugte besonders sicher verhindert wird. Es kann vorgesehen sein, dass die Klemmelemente verschweißbar, insbesondere kunstststoffverschweißbar, ausgebildet sind, sodass eine stoffschlüssige Verbindung herstellbar ist. Auch hierdurch wird der Zugriff durch Unbefugte besonders sicher verhindert.

Es ist ferner beim erfindungsgemäßen Bauzaunverbinder denkbar, dass die Klemmelemente zumindest teilweise bzw. vollständig ein elektrisch isolierendes Material aufweisen. Mit anderen Worten können die Klemmelemente im Wesentlichen aus einem elektrisch isolierenden Material ausgeführt sein, sodass diese einen Stromfluss auch beim Anlegen einer Spannung an die Klemmelemente sicher verhindern. Weiterhin wird dadurch verhindert, dass durch Influenz einer Ladungstrennung innerhalb der Klemmelemente stattfindet, wodurch es ebenfalls zu elektrischen Überschlägen kommen könnte. Es kann auch vorgesehen sein, dass der gesamte Bauzaunverbinder im Wesentlichen, insbesondere ausschließlich, aus einem isolierenden Material, insbesondere einem Kunststoff, besteht. Dadurch wird besonders sicher vermieden, dass eine elektrische Verbindung zwischen den Bauzaunelementen hergestellt wird, wenn die Klemmelemente miteinander verbunden sind.

Weiterhin kann bei einem erfindungsgemäßen Bauzaunverbinder vorteilhafterweise vorgesehen sein, dass das elektrisch isolierende Material der Klemmelemente als ein 1-komponentiges oder mehrkomponentiges Spritzgusssteil hergestellt wird, wobei vorzugsweise zumindest ein thermoplastischer Kunststoff vorhanden ist. Die Herstellung als 1-komponentiges Spritzgussteil bietet den Vorteil, dass die Klemmelemente besonders einfach und kostengünstig hergestellt werden können. Bei einem zwei- oder mehrkomponentigen Spritzgussteil als Klemmelement wird der Vorteil erreicht, dass unterschiedliche Eigenschaften an unterschiedlichen Positionen im Klemmelement durch die Verwendung unterschiedlicher Materialien erreicht werden können. Beispielsweise kann vorgesehen sein, den Isolatorabschnitt aus einem anderen Material herzustellen als den übrigen Teil des Klemmelements. Dadurch kann Beispielsweise der Vorteil erreicht werden, einerseits die elektrische Isolationseigenschaft im Isolatorabschnitt beizubehalten, während für den restlichen Teil des Klemmelements beispielsweise ein kostengünstigeres oder leichter zu verarbeitendes Material verwendet werden kann. Dabei können für die Klemmelemente insbesondere Kunststoffe verwendet werden, wie sie im Zusammenhang mit den Isolatorabschnitten beschrieben wurden.

Weiterhin ist es beim erfindungsgemäßen Bauzaunverbinder denkbar, dass die Klemmelemente ein UV-beständiges Material, insbesondere einen Kunststoff mit zumindest einem sterisch gehinderten Amin als additivem Lichtschutzmittel aufweisen. Die Verwendung eines UV-beständigen Materials bietet den Vorteil, dass die Klemmelemente auch über einen längeren Zeitraum im Freien verwendet werden können, ohne dass beispielsweise die mechanische Stabilität der Klemmelemente reduziert wird. Insbesondere bei Kunststoffen kann UV-Strahlung dazu führen, dass sich insbesondere die mechanischen Eigenschaften über die Zeit verschlechtern. Durch die Zugabe von sogenannten Hindered Amine Light Stabilizers (HALS), also sterisch gehinderten Aminen, in die Klemmelemente kann der negative Einfluss von UV-Strahlen auf das Material verringert werden. Auch ist es denkbar, dass die Klemmelemente durch eine Beschichtung, wie z. B Lackschicht oder Chromschicht, gegen äußere Umwelteinflüsse geschützt sind.

Weiterhin kann bei dem erfindungsgemäßen Bauzaunverbinder vorteilhafterweise vorgesehen sein, dass das isolierende Material der Klemmelemente, insbesondere mechanische, Verstärkungsmittel aufweist, insbesondere in Form von Fasern, die vorzugsweise Glasfasern und/oder Kohlenstofffasern aufweisen. Mit anderen Worten kann vorgesehen sein, dass die Klemmelemente zumindest ein mechanisches Verstärkungselement aufweisen, welches derart ausgestaltet ist, dass die mechanischen Eigenschaften der Klemmelemente, insbesondere die Härte, die Schlagzähigkeit, und/oder die Festigkeit verbessert. Dies bietet den Vorteil, dass auch ein grundsätzlich durch seine inhärenten mechanischen Materialeigenschaften ungeeigneter Werkstoff, welche jedoch andere Vorteile aufweist, dennoch zur Verwendung als Klemmelement geeignet ist. Weiterhin ist es beim erfindungsgemäßen Bauzaunverbinder denkbar, dass die Klemmelemente jeweils zumindest zwei Ausnehmungen aufweisen, welche im verbundenen Zustand die Öffnungen bilden. Mit anderen Worten können die Klemmelemente in ihrer Geometrie derart an die Bauzaunelemente angepasst sein, dass diese in einem verbundenen Zustand der Klemmelemente durch die verbundenen Klemmelemente hindurchführbar sind. Dies bietet den Vorteil, dass die Klemmelemente besonders einfach zu montieren und die Bauzaunelemente besonders leicht miteinander verbindbar sind. Dabei können die durch die Ausnehmungen geformten Öffnungen unterschiedliche Formen, insbesondere eine Kreisform, eine Halbkreisform, eine Ellipsenform oder eine Langlochform aufweisen. Die Kreisform bietet den Vorteil, dass diese besonders gut mit dem in der Regel kreisförmigen Querschnitt der Rahmenabschnitte der Bauzaunelemente zusammenpasst, sodass eine besonders stabile Verbindung der Bauzaunelemente ermöglicht wird. Die Langlochform bietet den Vorteil, dass einerseits an den Endpunkten eine gute mechanische Verbindung der Bauzaunelemente ermöglicht wird, wobei die Position der Rahmenabschnitte der Bauzaunelemente und damit der Bauzaunelemente insgesamt innerhalb des Langlochs verändert werden kann, ohne dass die Verbindung des Bauzaunverbinders getrennt werden muss.

Vorzugsweise kann beim erfindungsgemäßen Bauzaunverbinder vorgesehen sein, dass die Öffnungen so bemessen sind, dass zwischen den Öffnungen und den Rahmenabschnitten noch Spiel bleibt. Dies bietet den Vorteil, dass die Bauzaunelemente auch in einem verbundenen Zustand noch bewegt werden können, und dass das Entstehen mechanischer Spannungen zwischen Bauzaunelementen und Klemmelementen bzw. den Bauzaunelementen untereinander vermieden wird. Darüber hinaus wird das Risiko der Herstellung eines elektrischen Strompfades zwischen den Bauzaunelementen weiter reduziert.

Bei dem erfindungsgemäßen Bauzaunverbinder **ist** vorgesehen, dass die Klemmelemente zumindest teilweise oder vollständig eine Wabenstruktur aufweisen, wobei vorzugsweise eine Oberfläche der Klemmelemente im Bereich der Öffnungen in sich geschlossen ausgestaltet ist. Dies bietet den Vorteil, dass der Bauzaunverbinder an den mit der Wabenstruktur versehenen Bereichen auch bei reduziertem Materialeinsatz stabil bleibt. Dabei ist mit Wabenstruktur eine Zellstruktur gemeint, welche, insbesondere sechseckige, Hohlräume aufweist, welche lückenlos aneinanderreihbar sind. Es kann auch vorgesehen sein, dass die Zellen eine dreieckige oder viereckige Struktur aufweisen. Es kann vorgesehen sein, dass die Wabenstruktur von außerhalb des Klemmelements sichtbar ist, wodurch besonders viel Material eingespart werden kann. Alternativ dazu kann auch vorgesehen sein, dass die Wabenstruktur lediglich im Inneren des Klemmelements, insbesondere nicht im Oberflächenbereich der Öffnungen, vorgesehen ist, wodurch verhindert wird, dass sich Ablagerungen in den Klemmelementen sammeln können.

Vorzugsweise kann beim erfindungsgemäßen Bauzaunverbinder vorgesehen sein, dass die Klemmelemente zumindest eine Führungsöffnung, insbesondere eine Durchgangsöffnung aufweisen, welche insbesondere orthogonal zur ersten und zweiten Öffnung angeordnet ist, durch die ein Verbinder führbar ist, um die beiden Klemmelemente miteinander zu verbinden. Dies bietet den Vorteil, dass die Klemmelemente besonders einfach miteinander zu verbinden sind. Dabei kann vorgesehen sein, dass die Führungsöffnung ein Gewinde aufweist, in der ein Verbinder eingreifen kann. Dies bietet den Vorteil, dass eine besonders sichere Verbindung gewährleistet werden kann.

Weiterhin kann beim erfindungsgemäßen Bauzaunverbinder vorteilhafterweise vorgesehen sein, dass die Führungsöffnung zwischen der ersten und zweiten Öffnung angeordnet ist. Hierdurch wird vermieden, dass die Rahmenabschnitte der Bauzaunelemente beim Montieren des Bauzaunverbinders in dem Bereich liegen, durch den der Verbinder geführt wird, um die Klemmelemente zu verbinden.

Weiterhin ist beim erfindungsgemäßen Bauzaunverbinder denkbar, dass die Geometrie der Führungsöffnung geeignet ist, eine Mutter, insbesondere formschlüssig, aufzunehmen, insbesondere dass der Durchmesser zwischen 10 mm und 24 mm, bevorzugt zwischen 13 mm und 18 mm ist. Hierdurch wird der Vorteil erreicht, dass eine Verdrehung der Klemmelemente in Bezug auf die Mutter verhindert wird, wodurch die Montage vereinfacht wird. Es kann vorgesehen sein, dass die Mutter als metrische Mutter, insbesondere M10 Mutter, ausgebildet ist. Darüber hinaus kann vorgesehen sein, dass die Mutter in das Klemmelement eingespritzt ist. Dies bietet den Vorteil, dass die Mutter geschützt von Außeneinwirkungen ist. Weiterhin kann vorgesehen sein, dass die Mutter als selbstsichernde Mutter ausgebildet ist, um ein selbständiges Lösen zu vermeiden.

Es kann weiterhin beim erfindungsgemäßen Bauzaunverbinder vorgesehen sein, dass die Führungsöffnung eine Stufenbohrung aufweist. Eine Stufenbohrung bietet beispielsweise den Vorteil, dass eine Schraube mit einem Kopf auf der Stufe der Bohrung aufliegen kann, wobei die Bewegung der Schraube beim Verbinden der Klemmelemente begrenzt wird, wodurch die Montage vereinfacht wird. Es kann ebenfalls vorgesehen sein, dass zumindest eine Führungsöffnung als Sacklochbohrung ausgebildet ist. Dies bietet den Vorteil, dass für den Verbinder ein Endanschlag gebildet wird, durch welchen die Bewegung des Verbinders eingeschränkt ist, wodurch die Montage des Bauzaunverbinders vereinfacht wird. Außerdem wird das Eindringen von Ablagerungen in die Führungsöffnung von dieser Seite verhindert.

Weiterhin ist es bei einem erfindungsgemäßen Bauzaunverbinder denkbar, dass der Abstand der ersten und zweiten Öffnung zueinander zwischen 70 mm und 30 mm und bevorzugt zwischen 60 mm und 50 mm beträgt, und/oder der Abstand zwischen den Mittelpunkten der Öffnungen zwischen 80 mm und 120 mm und bevorzugt zwischen 90 mm und 110 mm beträgt und/oder die Länge einer Längsseite der Klemmelemente zwischen 120 mm und 160 mm und bevorzugt zwischen 130 mm und 150 mm beträgt. Dies bietet den Vorteil, dass der Bauzaunverbinder besonders einfach an standardisierten Bauzaunelementen anbringbar ist.

Es kann weiterhin beim erfindungsgemäßen Bauzaunverbinder vorgesehen sein, dass zumindest eines der Klemmelemente einen Verbinder, der durch zumindest eine Führungsöffnung der Klemmelemente geführt ist, wenn die Klemmelemente verbunden sind, sowie ein Sicherungselement, welches mit dem Verbinder verbindbar ist, wenn der Verbinder durch die Führungsöffnung geführt ist, aufweist. Dabei kann vorgesehen sein, dass der Verbinder als Gewindestange ausgebildet ist. Dies bietet den Vorteil, dass der Verbinder besonders einfach mit dem Klemmelement verbunden werden kann, insbesondere wenn das Klemmelement ein Gegengewinde aufweist. Ebenfalls kann vorgesehen sein, dass der Verbinder als Schraube ausgebildet ist. Alternativ kann auch vorgesehen sein, dass ein als Gewindestange ausgebildeter Verbinder einen Griff oder Flügel aufweist, wodurch der Verbinder auch ohne Werkzeug mit den Klemmelementen verbindbar ist. Alternativ oder ergänzend dazu kann auch vorgesehen sein, dass der Verbinder fest mit zumindest einem Klemmelement verbunden ist, beispielsweise form- und/oder stoffschlüssig, insbesondere eingespritzt ist. Dies bietet den Vorteil, dass die Montage insoweit vereinfacht wird, als dass der Verbinder beim Verbinden der Klemmelemente nicht verloren gehen kann. Es kann vorgesehen sein, dass der Verbinder einen Kunststoff aufweist oder im Wesentlichen daraus hergestellt ist, wodurch die elektrische Leitfähigkeit reduziert und damit die Sicherheit des Bauzaunverbinders erhöht wird. Es kann vorgesehen sein, dass die Klemmelemente, der Verbinder und das Sicherungselement ein Verbindersystem bilden, wobei das gesamte Verbindersystem einen Kunststoff aufweisen oder im Wesentlichen aus Kunststoff ausgebildet sein kann, wodurch eine elektrische Verbindung zwischen den Bauzaunelementen vermieden die Sicherheit des Bauzaunverbindersystems erhöht wird. Weiterhin ist es beim erfindungsgemäßen Bauzaunverbinder denkbar, dass das Sicherungselement als Mutter, insbesondere als Sicherheitsmutter (gemeint ist selbstsichernd) ausgebildet ist. Dies bietet den Vorteil, dass einerseits eine einfache Montage sichergestellt ist und andererseits vermieden wird, dass die Mutter sich von alleine lösen kann. Es kann ebenfalls vorgesehen sein, dass die Mutter als Flügelschraube ausgebildet ist, um eine Werkzeugfreie Montage zu ermöglichen. Weiterhin kann vorgesehen sein, dass die Mutter derart ausgebildet ist, dass sie nur mit einem Spezialwerkzeug, beispielsweise Innensechskant-Anschluss, Torx^{®}, mit dem Verbinder verbunden werden kann, wodurch insbesondere eine unbefugte Demontage verhindert werden kann. Alternativ kann auch ein Bajonettverschluss vorgesehen sein, wodurch eine schnelle und einfache Montage und Demontage ermöglicht wird.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Es zeigen schematisch:
- Fig. 1: einen erfindungsgemäßen Bauzaunverbinder in Verbindung mit einem ersten und zweiten Bauzaunelement,
- Fig. 2: eine perspektivische Darstellung eines erfindungsgemäßen Bauzaunverbinders in einem verbundenen Zustand,
- Fig. 3: eine Draufsicht auf ein erfindungsgemäßes Klemmelement,
- Fig. 4: eine weitere Draufsicht auf ein erfindungsgemäßes Klemmelement,
- Fig. 5: eine Seitenansicht eines erfindungsgemäßen Bauzaunverbinders im verbundenen Zustand, und
- Fig. 6: eine weitere Draufsicht auf erfindungsgemäße Klemmelemente mit einem Verbinder in einem getrennten Zustand

In der nachfolgenden Beschreibung zu einigen Ausführungsbeispielen der Erfindung werden für die gleichen technischen Merkmale auch in unterschiedlichen Ausführungsbeispielen die identischen Bezugszeichen verwendet.

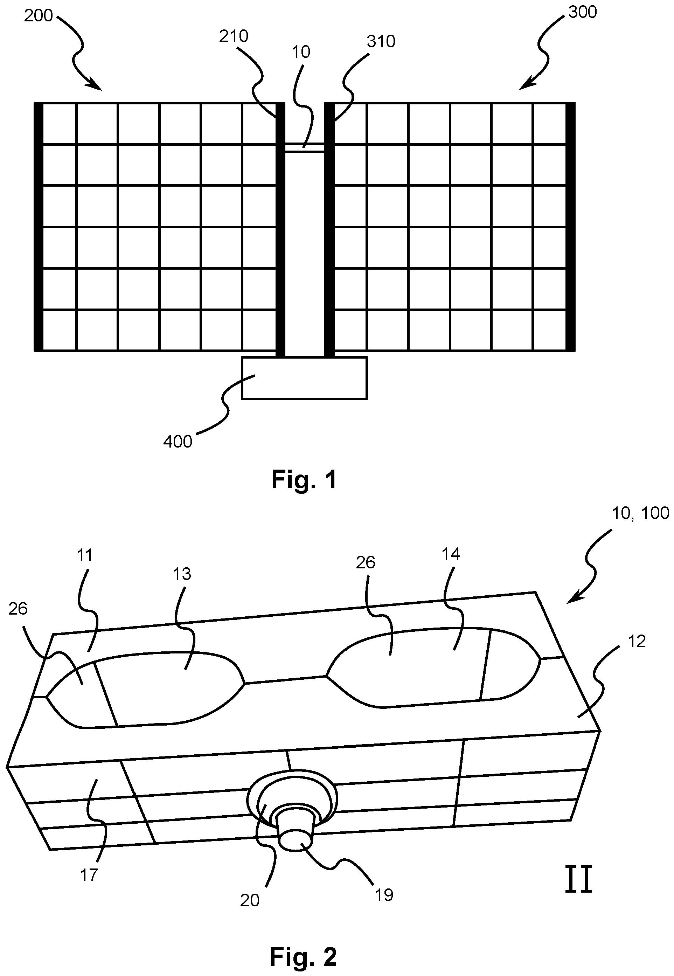

Figur 1 zeigt einen erfindungsgemäßen Bauzaunverbinder 10, welcher ein erstes Bauzaunelement 200 und ein zweites Bauzaunelement 300 an einem Rahmenabschnitt 210 des ersten Bauzaunelements 200 und an einem Rahmenabschnitt 310 des zweiten Bauzaunelements 300 verbindet. Wie in der Figur 1 dargestellt können die Bauzaunelemente 200, 300 auch durch einen Sockelverbinder 400 gestützt sein. Bauzaunelemente 200, 300 können sowohl Rahmenabschnitte 210, 310 als auch einen innerhalb der Rahmenabschnitte 210, 310 liegenden Bereich aufweisen, welche als Gitter ausgebildet sein kann.

Figur 2 zeigt einen Bauzaunverbinder 10, welcher ein erstes Klemmelement 11 und ein zweites Klemmelement 12 aufweist. In der Figur 2 sind die Klemmelemente 11, 12 in einem verbundenen Zustand II gezeigt, wodurch sie eine erste Öffnung 13 und eine zweite Öffnung 14 bilden, durch die jeweils ein Rahmenabschnitt 210, 310 des ersten und zweiten Bauzaunelements 200, 300 führbar ist. Gemäß der Figur 2 können die verbundenen Klemmelemente 11, 12 insgesamt einen quaderförmigen Körper bilden. Es kann vorgesehen sein, dass zumindest eines der Klemmelemente 11, 12 einen Verbinder 19 aufweist, der durch zumindest eine Führungsöffnung 18 der Klemmelemente 11, 12 geführt ist, wenn die Klemmelemente 11, 12 verbunden sind.

Es kann vorgesehen sein, dass die Klemmelemente 11, 12 zumindest teilweise bzw. vollständig ein elektrisch isolierendes Material aufweisen. Ebenfalls kann vorgesehen sein, dass das elektrisch isolierende Material der Klemmelemente 11, 12 als ein 1-komponentiges oder mehrkomponentiges Spritzgusssteil hergestellt ist, wobei vorzugsweise ein thermoplastischer Kunststoff vorhanden ist.

Ebenfalls kann vorgesehen sein, dass die Klemmelemente 11,12 ein UV-beständiges Material, insbesondere aus einem Kunststoff mit zumindest einem sterisch gehinderten Amin als additivem Lichtschutzmittel, aufweist. Es ist ebenfalls denkbar, dass das elektrisch isolierende Material der Klemmelemente 11, 12 insbesondere mechanische, Verstärkungsmittel aufweist, insbesondere in Form von Fasern, die vorzugsweise Glasfasern und/oder Kohlenstofffasern aufweisen.

Ebenfalls kann vorgesehen sein, dass die Führungsöffnung 18 zwischen der ersten und zweiten Öffnung 13, 14 angeordnet ist. In der Figur 2 ist angedeutet, dass das Klemmelement 12 zumindest teilweise eine Wabenstruktur 17 aufweist, wobei eine Innenfläche 26 des Klemmelements 12 im Bereich der Öffnungen 13, 14 in sich geschlossen ausgestaltet ist. Der Verbinder 19 ist in der Figur 2 durch ein Sicherungselement 20 gesichert.

Die Klemmelemente 11, 12, der Verbinder 19 und das Sicherungselement 20 können ein Bauzaunverbindersystem 100 bilden, welches die gleichen Vorteile mit sich bringt wie der Bauzaunverbinder 10.

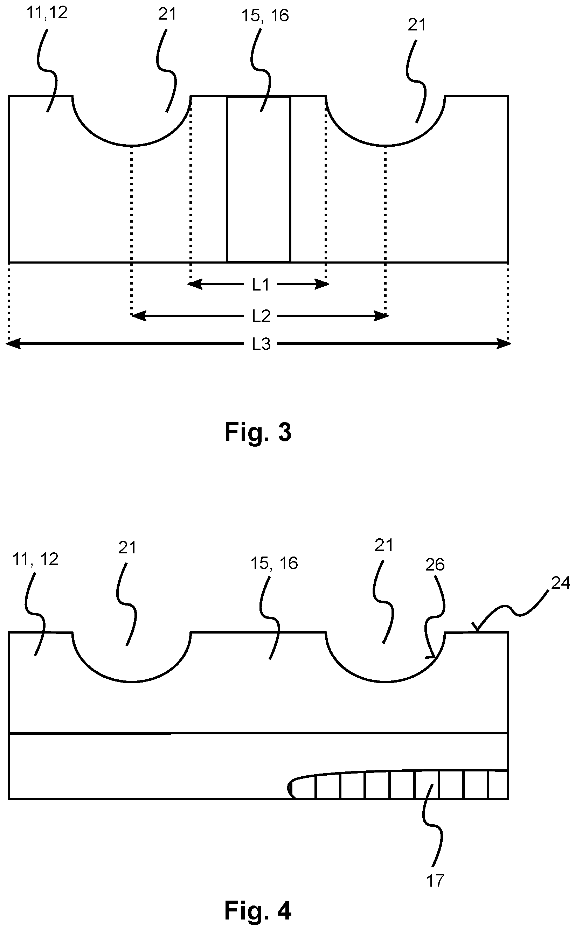

Die Figur 3 zeigt ein Klemmelement 11, 12 mit einem Isolatorabschnitt 15, 16, welcher zwischen Ausnehmungsbereichen 21 des Klemmelements 11, 12 ausgebildet ist. Die Ausnehmungen 21 können im verbundenen Zustand II die Öffnungen 13, 14 bilden. Durch den Isolatorabschnitt 15, 16 wird verhindert, dass ein Strom zwischen den Bauzaunelementen 200, 300 fließen kann, wenn die Bauzaunelemente 200, 300 miteinander durch den Bauzaunverbinder 10 verbunden sind.

Darüber hinaus zeigt die Figur 3 einen Abstand L1 der ersten und zweiten Öffnung 13, 14 zueinander, welcher zwischen 70 mm und 30 mm und bevorzugt zwischen 60 mm und 50 mm betragen kann. Ebenfalls gezeigt ist ein Abstand L2 zwischen den Mittelpunkten der Öffnungen 13, 14 der zwischen 80 mm und 120 mm und bevorzugt zwischen 90 mm und 110 mm betragen kann. Ebenfalls in der Figur 3 gezeigt ist eine Länge L3 einer Längsseite der Klemmelemente 11, 12, welche zwischen 120 mm und 160 mm und bevorzugt zwischen 130 mm und 150 mm betragen kann.

Eine alternative Ausführung des Isolatorabschnitts 15,16 ist in der Figur 4 gezeigt. Der Isolatorabschnitt 15, 16 kann sich über die Längsseite des Klemmelements 11, 12 und an einer Kontaktfläche 24, welche auf eine entsprechende Kontaktfläche 24 des Klemmelements 11, 12 trifft, wenn die Klemmelemente 11, 12 miteinander verbunden sind, und einer Innenfläche 26 des Ausnehmungsbereich 21 erstrecken.

Ebenfalls in der Figur 4 gezeigt ist eine im Klemmelement 11,12 vorgesehene Wabenstruktur 17, die von oben in einem gebrochen dargestellten Teil der Querfläche 23 sichtbar ist. Dabei kann vorgesehen sein, dass die Oberfläche der Klemmelemente 11, 12 im Bereich der Öffnungen in sich geschlossen ausgestaltet ist.

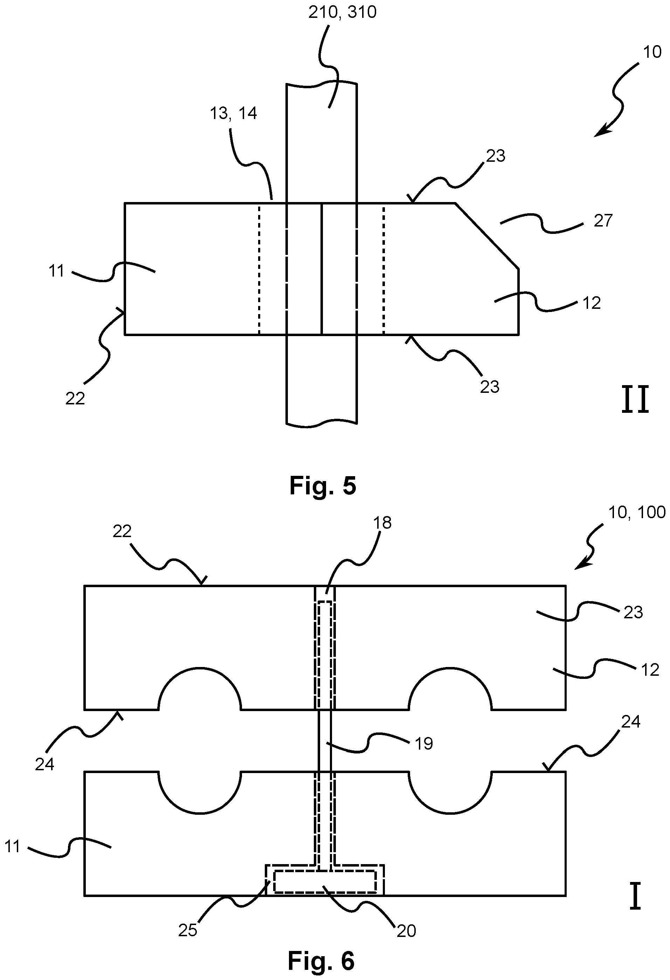

Die Figur 5 zeigt den Bauzaunverbinder 10 in einem verbundenen Zustand II von der Seite. Dabei ist zu erkennen, wie das erste Klemmelement 11 mit einer Kontaktfläche 24 auf das zweite Klemmelement 12 und dessen Kontaktfläche 24 trifft. Durch die erste und zweite Öffnung 13,14 ist ein Rahmenabschnitt 210, 310 des Bauzaunelements 200, 300 geführt. Dabei können die Öffnungen 13, 14 so bemessen sein, dass zwischen den Öffnungen 13, 14 und den Rahmenabschnitten 210, 310, noch Spiel verbleibt. Ebenfalls in der Figur 5 dargestellt ist, dass die Längsfläche 22 mit der Querfläche 23 über eine Fase 27 verbunden sein kann. Dies bietet den Vorteil, dass Niederschläge sich nicht auf der Querfläche 23 ansammeln können. Alternativ dazu kann zumindest ein Witterungsabschnitt 27 vorgesehen sein, welcher auch als wasserabweisende Beschichtung oder strukturierte Oberfläche ausgebildet sein kann.

Die Figur 6 zeigt einen erfindungsgemäßen Bauzaunverbinder 10 bzw. ein Bauzaunverbindersystem 100 mit Klemmelementen 11, 12. Dabei ist das Klemmelement 11 mit dem Klemmelement 12 durch einen Verbinder 19 verbunden, welcher durch eine Führungsöffnung 18 geführt ist.

Dabei ist die Durchgangsöffnung 18 gemäß der Figur 6 orthogonal zur ersten und zweiten Öffnung 13, 14 angeordnet. Dabei kann der Verbinder 19 beispielsweise als Gewindestange oder Schraube oder als Gewindestange mit Griff ausgebildet sein. Die Führungsöffnung 18 kann ein Gewinde aufweisen, das mit einem entsprechenden Gegengewinde des Verbinders 19 in Wirkverbindung bringbar ist. Wie in der Figur 6 dargestellt ist, kann die Führungsöffnung 18 sowohl wie im zweiten Klemmelement 12 dargestellt als Durchgangsöffnung 18 als auch als eine Stufenbohrung 25 wie am ersten Klemmelement 11 dargestellt ausgebildet sein.

Weiterhin kann vorgesehen sein, dass die Geometrie der Führungsöffnung 18 geeignet ist, eine Mutter, insbesondere formschlüssig, aufzunehmen, insbesondere dass der Durchmesser zwischen 10 mm und 24 mm, bevorzugt zwischen 13 mm und 18 mm ist. Beim Verbinden der Klemmelemente 11, 12 mit dem Verbinder 19 treffen die Kontaktflächen 24 der Klemmelemente 11, 12 aufeinander, wobei sich eine erste Öffnung 13 und eine zweite Öffnung 14 bilden, durch die die Rahmenabschnitte 210, 310 der Bauzaunelemente 200, 300 führen lassen, wodurch die Bauzaunelemente 200, 300 verbunden werden können. Die voranstehende Erläuterung der Ausführungsformen beschreibt die vorliegende Erfindung ausschließlich im Rahmen von Beispielen.

### Bezugszeichenliste

- 10: Bauzaunverbinder
- 11: erstes Klemmelement
- 12: zweites Klemmelement
- 13: erste Öffnung
- 14: zweite Öffnung
- 15: erster Isolatorabschnitt
- 16: zweiter Isolatorabschnitt
- 17: Wabenstruktur
- 18: Führungsöffnung, Durchgangsöffnung
- 19: Verbinder
- 20: Sicherungselement
- 21: Ausnehmungsbereich
- 22: Längsfläche
- 23: Querfläche
- 24: Kontaktfläche
- 25: Stufenbohrung
- 26: Innenfläche
- 27: Witterungsabschnitt, Fase

- 100: Bauzaunverbindersystem

- 200: erstes Bauzaunelement
- 210: Rahmenabschnitt

- 300: zweites Bauzaunelement
- 310: Rahmenabschnitt

- 400: Sockelverbinder

- I: getrennter Zustand
- II: verbundener Zustand

- L1: Abstand der ersten und zweiten Öffnung
- L2: Abstand zwischen Mittelpunkten der Öffnungen
- L3: Länge einer Längsseite der Klemmelemente

## Patentansprüche

1. Bauzaunverbinder (10) zum Verbinden von einem ersten und zweiten Bauzaunelement (200, 300), aufweisend ein erstes und ein zweites Klemmelement (11, 12), die miteinander verbindbar sind und in einem verbundenen Zustand (II) eine erste und eine zweite Öffnung (13, 14) bilden, durch die jeweils ein Rahmenabschnitt (210, 310) des ersten und zweiten Bauzaunelements (200, 300) führbar ist, wodurch die Bauzaunelemente (200, 300) miteinander verbindbar sind, wobei die Klemmelemente (11, 12) jeweils zumindest einen Isolatorabschnitt (15, 16) aufweisen, wobei die Isolatorabschnitte (15, 16) derart ausgestaltet sind, dass die Bauzaunelemente (200, 300) elektrisch voneinander getrennt sind, wenn die Bauzaunelemente (200, 300) durch die Klemmelemente (11, 12) verbunden sind, **dadurch gekennzeichnet, dass** die Klemmelemente (11, 12) zumindest teilweise oder vollständig eine Wabenstruktur (17) aufweisen, wobei vorzugsweise eine Oberfläche der Klemmelemente (11, 12) im Bereich der Öffnungen in sich geschlossen ausgestaltet ist.

2. Bauzaunverbinder (10) nach Anspruch 1,
**dadurch gekennzeichnet,**
**dass** die Klemmelemente (11, 12) zumindest teilweise bzw. vollständig ein elektrisch isolierendes Material aufweisen.

3. Bauzaunverbinder (10) nach Anspruch 1 oder 2,
**dadurch gekennzeichnet,**
**dass** das elektrisch isolierende Material der Klemmelemente (11, 12) als ein 1-komponentiges oder mehrkomponentiges Spritzgusssteil hergestellt ist, wobei vorzugsweise zumindest ein thermoplastischer Kunststoff vorhanden ist.

4. Bauzaunverbinder (10) nach einem der vorhergehenden Ansprüche,
**dadurch gekennzeichnet,**
**dass** die Klemmelemente (11, 12) ein UV-beständiges Material, insbesondere aus einem Kunststoff mit zumindest einem sterisch gehinderten Amin als additivem Lichtschutzmittel, aufweist.

5. Bauzaunverbinder (10) nach einem der vorhergehenden Ansprüche,
**dadurch gekennzeichnet,**
**dass** das elektrisch isolierende Material der Klemmelemente (11, 12), insbesondere mechanische, Verstärkungsmittel aufweist, insbesondere in Form von Fasern, die vorzugsweise Glasfasern und/oder Kohlstofffasern aufweisen.

6. Bauzaunverbinder (10) nach einem der vorhergehenden Ansprüche,
**dadurch gekennzeichnet,**
**dass** die Klemmelemente (11, 12) jeweils zumindest zwei Ausnehmungen (21) aufweisen, welche im verbundenen Zustand (II) die Öffnungen (13, 14) bilden.

7. Bauzaunverbinder (10) nach einem der vorhergehenden Ansprüche,
**dadurch gekennzeichnet,**
**dass** die Öffnungen (13, 14) so bemessen sind, dass zwischen den Öffnungen (13, 14) und den Rahmenabschnitten (210, 310) noch Spiel verbleibt.

8. Bauzaunverbinder (10) nach einem der vorhergehenden Ansprüche,
**dadurch gekennzeichnet,**
**dass** die Klemmelemente (11, 12) jeweils zumindest eine Führungsöffnung (18), insbesondere eine Durchgangsöffnung (18), aufweisen, welche insbesondere orthogonal zur ersten und zweiten Öffnung (13, 14) angeordnet ist, durch die ein Verbinder (19) führbar ist, um die beiden Klemmelemente (11, 12) miteinander zu verbinden.

9. Bauzaunverbinder (10) nach Anspruch 8,
**dadurch gekennzeichnet,**
**dass** die Führungsöffnung (18) zwischen der ersten und zweiten Öffnung (13, 14) angeordnet ist.

10. Bauzaunverbinder (10) nach einem der Ansprüche 8 oder 9,
**dadurch gekennzeichnet,**
**dass** die Geometrie der Führungsöffnung (18) geeignet ist, eine Mutter, insbesondere formschlüssig, aufzunehmen, insbesondere dass der Durchmesser zwischen 10 mm und 24 mm, bevorzugt zwischen 13 mm und 18 mm ist.

11. Bauzaunverbinder (10) nach einem der Ansprüche 8 bis 10,
**dadurch gekennzeichnet,**
**dass** die Führungsöffnung (18) eine Stufenbohrung (25) aufweist.

12. Bauzaunverbinder (10) nach einem der vorhergehenden Ansprüche,
**dadurch gekennzeichnet,**
**dass** der Abstand (L1) der ersten und zweiten Öffnung (13, 14) zueinander zwischen 70 mm und 30 mm und bevorzugt zwischen 60 mm und 50 mm beträgt, und/oder der Abstand (L2) zwischen den Mittelpunkten der Öffnungen (13, 14) zwischen 80 mm und 120 mm und bevorzugt zwischen 90 mm und 110 mm beträgt und/oder die Länge (L3) einer Längsseite der Klemmelemente (11, 12) zwischen 120 mm und 160 mm und bevorzugt zwischen 130 mm und 150 mm beträgt.

13. Bauzaunverbinder (10) nach einem der vorhergehenden Ansprüche,
**dadurch gekennzeichnet,**
**dass** zumindest eines der Klemmelemente (11, 12) einen Verbinder (19), der durch zumindest eine Führungsöffnung (18) der Klemmelemente (11, 12) geführt ist, wenn die Klemmelemente (11, 12) verbunden sind, sowie einem Sicherungselement (20), welches mit dem Verbinder (19) verbindbar ist, wenn der Verbinder (19) durch die Führungsöffnung (18) geführt ist, aufweist.

14. Bauzaunverbinder (10) nach Anspruch 13,
**dadurch gekennzeichnet,**
**dass** das Sicherungselement (20) als Mutter, insbesondere als Sicherheitsmutter (20) ausgebildet ist.

## Claims

1. Construction fence connector (10) for connecting a first and a second construction fence element (200, 300), having a first and a second clamping element (11, 12) which can be connected to one another and, in a connected state (II), form a first and a second opening (13, 14) through each of which a frame section (210, 310) of the first and second construction fence elements (200, 300) can be guided, as a result of which the construction fence elements (200, 300) can be connected to one another,
the clamping elements (11, 12) each having at least one insulator section (15, 16), the insulator sections (15, 16) being designed in such a way that the construction fence elements (200, 300) are electrically isolated from one another when the construction fence elements (200, 300) are connected by the clamping elements (11, 12), **characterized in that**
the clamping elements (11, 12) have at least partially or completely a honeycomb structure (17), wherein preferably a surface of the clamping elements (11, 12) in the area of the openings is designed to be closed in itself.

2. Construction fence connector (10) according to claim 1,
**characterized in that**
the clamping elements (11, 12) have at least partially or completely an electrically insulating material.

3. Construction fence connector (10) according to claim 1 or 2,
**characterized in that**
the electrically insulating material of the clamping elements (11, 12) is produced as a single-component or multi-component injection-molded part, preferably comprising at least one thermoplastic material.

4. Construction fence connector (10) according to one of the preceding claims, **characterized in that**
the clamping elements (11, 12) comprise a UV-resistant material, in particular a plastic with at least one sterically hindered amine as an additive light stabilizer.

5. Construction fence connector (10) according to one of the preceding claims, **characterized in that**
the electrically insulating material of the clamping elements (11, 12) comprises, in particular mechanical, reinforcing means, in particular in the form of fibers, which preferably comprise glass fibers and/or carbon fibers.

6. Construction fence connector (10) according to one of the preceding claims, **characterized in that**
the clamping elements (11, 12) each have at least two recesses (21), which form the openings (13, 14) in the connected state (II).

7. Construction fence connector (10) according to one of the preceding claims, **characterized in that**
the openings (13, 14) are dimensioned such that there is still clearance between the openings (13, 14) and the frame sections (210, 310).

8. Construction fence connector (10) according to one of the preceding claims, **characterized in that**
the clamping elements (11, 12) each have at least one guide opening (18), in particular a through-opening (18), which is arranged in particular orthogonally to the first and second openings (13, 14), through which a connector (19) can be guided in order to connect the two clamping elements (11, 12) to one another.

9. Construction fence connector (10) according to claim 8,
**characterized in that**
the guide opening (18) is arranged between the first and second openings (13, 14).

10. Construction fence connector (10) according to one of claims 8 or 9,
**characterized in that**
the geometry of the guide opening (18) is suitable for receiving a nut, in particular in a form-fitting manner, in particular that the diameter is between 10 mm and 24 mm, preferably between 13 mm and 18 mm.

11. Construction fence connector (10) according to any one of claims 8 to 10, **characterized in that**
the guide opening (18) has a stepped bore (25).

12. Construction fence connector (10) according to one of the preceding claims, **characterized in that**
the distance (L1) between the first and second openings (13, 14) is between 70 mm and 30 mm and preferably between 60 mm and 50 mm, and/or
the distance (L2) between the centers of the openings (13, 14) is between 80 mm and 120 mm and preferably between 90 mm and 110 mm and/or
the length (L3) of one longitudinal side of the clamping elements (11, 12) is between 120 mm and 160 mm and preferably between 130 mm and 150 mm.

13. Construction fence connector (10) according to one of the preceding claims, **characterized in that**
at least one of the clamping elements (11, 12) has a connector (19), which is guided through at least one guide opening (18) of the clamping elements (11, 12) when the clamping elements (11, 12) are connected, and a securing element (20), which can be connected to the connector (19) when the connector (19) is guided through the guide opening (18).

14. Construction fence connector (10) according to claim 13,
**characterized in that**
the securing element (20) is designed as a nut, in particular as a safety nut (20).

## Revendications

1. Connecteur de clôture de chantier (10) pour connecter un premier et un deuxième élément de clôture de chantier (200, 300), présentant un premier et un deuxième élément de serrage (11, 12) qui peuvent être connectés l'un à l'autre et qui forment, dans un état connecté (II), une première et une deuxième ouverture (13, 14) à travers lesquelles peut être guidée respectivement une section de cadre (210, 310) du premier et du deuxième élément de clôture de chantier (200, 300), ce qui permet de connecter les éléments de clôture de chantier (200, 300) l'un à l'autre,
les éléments de serrage (11, 12) présentant chacun au moins une section d'isolateur (15, 16), les sections d'isolateur (15, 16) étant conçues de telle sorte que les éléments de clôture de chantier (200, 300) sont séparés électriquement les uns des autres lorsque les éléments de clôture de chantier (200, 300) sont reliés par les éléments de serrage (11, 12),
**caractérisé en ce que**
les éléments de serrage (11, 12) présentent au moins partiellement ou complètement une structure en nid d'abeilles (17), une surface des éléments de serrage (11, 12) étant de préférence réalisée fermée sur elle-même dans la zone des ouvertures.

2. Connecteur de clôture de chantier (10) selon la revendication 1,
**caractérisé en ce que**
les éléments de serrage (11, 12) présentent au moins partiellement ou complètement un matériau électriquement isolant.

3. Connecteur de clôture de chantier (10) selon la revendication 1 ou 2,
**caractérisé en ce que**
le matériau électriquement isolant des éléments de serrage (11, 12) est fabriqué sous la forme d'une pièce moulée par injection à un ou plusieurs composants, au moins une matière thermoplastique étant de préférence présente.

4. Connecteur de clôture de chantier (10) selon l'une des revendications précédentes, **caractérisé en ce que**
les éléments de serrage (11, 12) présentent un matériau résistant aux UV, en particulier en une matière plastique avec au moins une amine à empêchement stérique comme agent de protection contre la lumière additif.

5. Connecteur de clôture de chantier (10) selon l'une des revendications précédentes, **caractérisé en ce que**
le matériau électriquement isolant des éléments de serrage (11, 12), en particulier mécanique, comporte des moyens de renforcement, en particulier sous forme de fibres, qui comportent de préférence des fibres de verre et/ou des fibres de carbone.

6. Connecteur de clôture de chantier (10) selon l'une des revendications précédentes, **caractérisé en ce que**
les éléments de serrage (11, 12) présentent chacun au moins deux évidements (21) qui, à l'état assemblé (II), forment les ouvertures (13, 14).

7. Connecteur de clôture de chantier (10) selon l'une des revendications précédentes, **caractérisé en ce que**
les ouvertures (13, 14) sont dimensionnées de telle sorte qu'il reste encore du jeu entre les ouvertures (13, 14) et les sections de cadre (210, 310).

8. Connecteur de clôture de chantier (10) selon l'une des revendications précédentes, **caractérisé en ce que**
les éléments de serrage (11, 12) présentent chacun au moins une ouverture de guidage (18), en particulier une ouverture de passage (18), qui est disposée en particulier orthogonalement à la première et à la deuxième ouverture (13, 14), à travers laquelle un connecteur (19) peut être guidé pour relier les deux éléments de serrage (11, 12) entre eux.

9. Connecteur de clôture de chantier (10) selon la revendication 8,
**caractérisé en ce que**
l'ouverture de guidage (18) est disposée entre la première et la deuxième ouverture (13, 14).

10. Connecteur de clôture de chantier (10) selon l'une des revendications 8 ou 9, **caractérisé en ce que**
la géométrie de l'ouverture de guidage (18) est appropriée pour recevoir un écrou, en particulier par complémentarité de forme, notamment **en ce que** le diamètre est compris entre 10 mm et 24 mm, de préférence entre 13 mm et 18 mm.

11. Connecteur de clôture de chantier (10) selon l'une quelconque des revendications 8 à 10,
**caractérisé en ce que**
l'ouverture de guidage (18) présente un alésage étagé (25).

12. Connecteur de clôture de chantier (10) selon l'une des revendications précédentes, **caractérisé en ce que**
la distance (L1) entre la première et la deuxième ouverture (13, 14) est comprise entre 70 mm et 30 mm et de préférence entre 60 mm et 50 mm, et/ou
la distance (L2) entre les centres des ouvertures (13, 14) est comprise entre 80 mm et 120 mm et de préférence entre 90 mm et 110 mm et/ou
la longueur (L3) d'un côté longitudinal des éléments de serrage (11, 12) est comprise entre 120 mm et 160 mm et de préférence entre 130 mm et 150 mm.

13. Connecteur de clôture de chantier (10) selon l'une des revendications précédentes, **caractérisé en ce qu'**
au moins l'un des éléments de serrage (11, 12) comprend un connecteur (19) qui est guidé à travers au moins une ouverture de guidage (18) des éléments de serrage (11, 12) lorsque les éléments de serrage (11, 12) sont connectés, et un élément de sécurité (20) qui peut être connecté au connecteur (19) lorsque le connecteur (19) est guidé à travers l'ouverture de guidage (18).

14. Connecteur de clôture de chantier (10) selon la revendication 13,
**caractérisé en ce que**
l'élément de sécurité (20) est réalisé sous forme d'écrou, en particulier d'écrou de sécurité (20).
